# EUROPÄISCHE PATENTANMELDUNG

(11) **EP 2 230 815 A2**
(43) Veröffentlichungstag der Anmeldung: **22.09.2010**
(21) Anmeldenummer: 09014741.4
(22) Anmeldetag: 26.11.2009
(51) Int. Cl.: H04L 29/08

(54) **Datenleitung mit einem RFID-Chip zur Verbindung von Netzwerkinfrastrukturgeräten innerhalb eines Netzwerks**

(30) Priorität: 29.11.2008 DE 102008059691
(71) Anmelder: Hirschmann Automation and Control GmbH, 72654 Neckartenzlingen (DE)
(72) Erfinder: Reister, Klaus, 73265 Dettingen/Teck (DE)
(74) Vertreter: Greif, Thomas

(57) **Zusammenfassung**

Die Erfindung betrifft ein Netzwerkinfrastrukturgerät (2 bis 5), das in einem Netzwerk (1) angeordnet ist, wobei das Netzwerkinfrastrukturgerät (2 bis 5) über eine Datenleitung (6 bis 9) mit anderen Netzwerkinfrastrukturgeräten (2 bis 5) verbunden wird, in dem die einen Stecker (15) aufweisende Datenleitung (6 bis 9) in eine Buchse (14) des Netzwerkinfrastrukturgeräts (2 bis 5) eingesteckt wird, wobei erfindungsgemäß vorgesehen ist, dass das Netzwerkinfrastrukturgerät (2 bis 5) eine funkbasierte Leseeinrichtung (16) aufweist und im Bereich des Steckers (15) der Datenleitung (6 bis 9) ein RFID-Chip (17) vorgesehen ist, wobei der RFID-Chip (17) zumindest Daten über den Typ der Datenleitung (6 bis 9) enthält, wobei diese Daten von der Leseeinrichtung (16) ausgelesen und von dem Netzwerkinfrastrukturgerät (2 bis 5) verarbeitet werden.

## Beschreibung

Die Erfindung betrifft ein Netzwerkinfrastrukturgerät, das in einem Netzwerk angeordnet ist, sowie eine Datenleitung, ausgebildet zum Einsatz in einem Netzwerk, gemäß den Merkmalen des jeweiligen Oberbegriffs der unabhängigen Patentansprüche.

Netzwerke mit einer von dem Anwender vorgegebenen Netzwerktopologie, wobei innerhalb der Netzwerktopologie Netzwerkinfrastrukturgeräte angeordnet und über Datenleitungen miteinander verbunden sind, sind grundsätzlich bekannt. Je nach Ausgestaltung der Netzwerkinfrastrukturgeräte, wie z. B. als Router, Hub, Switch oder dergleichen können zur Verbindung dieser Geräte untereinander gleiche oder unterschiedliche Datenleitungen zum Einsatz kommen.

In der Bürokommunikation z. B. ist es bekannt, dass in einem Gebäude ein Netzwerk durch Datenleitungen aufgebaut wird, die innerhalb des Gebäudes verlegt sind. Von Endpunkten, die z. B. in Bodentanks angebracht sind, werden über Datenleitungen (z. B. Patchkabel) Verbindungen zu Endgeräten, wie beispielsweise PCs, Drucker oder dergleichen, hergestellt. Dabei weist die Datenleitung in ihren Endbereich einen Stecker auf, der einerseits in eine Buchse im Bodentank und andererseits in eine Buchse des Netzwerkinfrastrukturgeräts (hier z. B. der PC) gesteckt wird. Dabei kann es jedoch passieren, dass auf Grund der Gleichartigkeit von Stecker und zugehöriger Buchse trotzdem ein falsches Kabel verwendet wird, weil bei mehreren Leitungen innerhalb der Datenleitung die Belegung des Steckers und der Buchse unterschiedlich ist. Dadurch kann es entweder zu Fehlfunktionen oder keiner Inbetriebnahme der Netzwerkinfrastrukturgeräte innerhalb des Netzwerks kommen, da innerhalb der Netzwerktopologie keine Verbindung zwischen den Geräten zustande kommt.

Der Erfindung liegt daher die Aufgabe zu Grunde, die eingangs geschilderte Problematik zu beseitigen und Netzwerkinfrastrukturgeräte bzw. Datenleitungen bereit zu stellen, mit denen ohne weiteres entweder Fehler bei der Auswahl der zu verwendenden Datenleitungen erkannt werden oder Fehlfunktionen auf Grund der falschen Anwendung einer Datenleitung erkannt werden.

Diese Aufgabe ist durch die Merkmale der jeweiligen unabhängigen Patentansprüche gelöst.

Einerseits stellt die Erfindung ein Netzwerkinfrastrukturgerät bereit, wobei das Netzwerkinfrastrukturgerät eine funkbasierte Leseeinrichtung aufweist und im Bereich des Steckers der Datenleitung ein RFID-Chip vorgesehen ist, wobei der RFID-Chip zumindest Daten über den Typ der Datenleitung enthält, wobei diese Daten von der Leseeinrichtung ausgelesen und von dem Netzwerkinfrastrukturgerät verarbeitet werden. Somit kann der Typ, der an dem Netzwerkinfrastrukturgerät angeschlossenen Datenleitung von dem Netzwerkinfrastrukturgerät erfasst werden, wozu das Netzwerkinfrastrukturgerät die erfassten Daten auswertet und z. B. anhand hinterlegter Daten entscheidet, ob für dieses Netzwerkinfrastrukturgerät eine Kommunikation innerhalb des Netzwerks mit anderen Netzwerkinfrastrukturgeräten über den angeschlossenen Typ der Datenleitung möglich ist oder nicht. Hierzu vergleicht das Netzwerkinfrastrukturgerät die erfassten Daten mit entweder im Netzwerkinfrastrukturgerät hinterlegten Daten von Typen von geeigneten Datenleitungen oder mit an anderer Stelle innerhalb des Netzwerks hinterlegter Daten von geeigneten Typen von Datenleitungen. Auf Grund des Vergleichs stellt das Netzwerkinfrastrukturgerät entweder fest, dass eine Kommunikation mit anderen Geräten innerhalb des Netzwerks über die angeschlossene Datenleitung möglich ist, sodass eine Kommunikation erfolgen kann, oder es stellt fest, dass keine Kommunikation auf Grund einer falschen angeschlossenen Datenleitung nicht möglich ist, sodass dies einen Anwender, z. B. einem Netzwerkadministrator, angezeigt werden kann, sodass ein Austausch der Datenleitung möglich ist. Die Daten über den Typ der Datenleitung enthalten beispielsweise die Anzahl der elektrischen Leiter innerhalb der Datenleitung, eine Liste über Netzwerkinfrastrukturgeräte, die mit dieser Datenleitung verbindbar sind, über die Art und Ausgestaltung der Steckverbindung (ob es sich z. B. um einen Stecker oder eine Buchse handelt, deren Pinbelegung und dergleichen) die Länge der Datenleitung, die Farbe der Datenleitung oder dergleichen. So kann beispielsweise über die in dem RFID-Chip der Datenleitung gespeicherten Daten, die von dem Netzwerkinfrastrukturgerät über die Leseeinrichtung ausgelesen werden, festgestellt werden, dass mit einer Datenleitung mit bestimmter Farbe die Kommunikation der angeschlossenen Netzwerkinfrastrukturgeräte nicht möglich ist und dem Anwender ein Hinweis gegeben wird, anstelle der angeschlossenen Datenleitung mit bestimmter Farbe eine Datenleitung mit einer anderen Farbe zu verwenden, mit der dann die Kommunikation der angeschlossenen Netzwerkinfrastrukturgeräte möglich ist.

In einer weiteren Ausgestaltung der Erfindung ist das Netzwerkinfrastrukturgerät dazu ausgebildet, die von der Leseeinrichtung ausgelesenen Daten an weitere Netzwerkinfrastrukturgeräte zu übertragen. Damit kann beispielsweise die komplette Netzwerktopologie und die hierfür verwendeten Datenleitungen z. B. in einer Netzwerk-Management-Station abgelegt werden. Für den Fall, dass beispielsweise auf Grund von Kabelbruch eine bestimmte Datenleitung defekt ist, kann der Anwender aus den Daten, die in der Netzwerk-Management-Station hinterlegt sind, sofort erkennen, welchen Typ von Datenleitung er zwecks Austausch bereithalten muss. Gleiches gilt auch für die Inbetriebnahme beim Aufbau eines Netzwerks, wobei die zu verwendenden Typen von Datenleitungen vorab in der Netzwerk-Management-Station abgespeichert sind, wodurch den Netzwerktechnikern, die das Netzwerk aufbauen, Hinweise darauf zu geben, welche Typen von Datenleitungen zwischen den jeweils beteiligten Netzwerkinfrastrukturgeräten einzusetzen sind. Sollte es hierbei dennoch zu einer Fehlauswahl kommen, ist es mit der vorliegenden Erfindung ohne weiteres möglich, diese Fehlauswahl zu erkennen und eine Datenleitung auszutauschen.

Von besonderem Vorteil ist es, wenn das zumindest eine Netzwerkinfrastrukturgerät ein Switch, ein Router oder ein Hub ist, da sich diese Art von Geräten besonders leicht, schnell und einfach miteinander verbinden lassen, wenn der Leitungs- und/oder Steckertyp bekannt ist und von dem Gerät selbsttätig erkannt wird, um so auch Fehlverbindungen und/oder Fehlkonfigurationen zu vermeiden.

Andererseits stellt die Erfindung eine Datenleitung, ausgebildet zum Einsatz in einem Netzwerk, bereit, wobei die Datenleitung einen RFID-Chip aufweist, der Daten zumindest in Bezug auf den Typ der Datenleitung enthält, wobei diese Daten von einem Netzwerkinfrastrukturgerät ausgelesen werden können. Dadurch ist es ohne weiteres möglich, dass Datenleitungen in vielfältiger Weise produziert und vorzugsweise in ihren Endbereichen, aber auch verteilt über die gesamte Länge, mit zumindest einem RFID-Chip oder mehreren RFID-Chips versehen werden, in denen nach der fertigen Konfektionierung der Datenleitung (Konfektionierung = bestimme Datenlänge und Steckverbindung am Ende der Datenleitung) mit den Daten zum Typ und deren Konfektionierung der Datenleitung versehen werden. Dies kann schnell und unkompliziert unter Verwendung einer entsprechenden Schreibeinrichtung realisiert werden, wobei dieser Vorgang nach der fertigen Konfektionierung der Datenleitung in besonders vorteilhafter Weise auch automatisiert vorgenommen werden kann.

In besonders vorteilhafter Weise ist der zumindest eine RFID-Chip in dem Steckverbinder der Datenleitung, insbesondere dem Stecker, und/oder in der Datenleitung selber, insbesondere in dem Außenmantel der Datenleitung, angeordnet. Dies hat den Vorteil, dass die in an sich bekannter Weise ausgeführten RFID-Chips, die heute schon äußerst kostengünstig in großen Stückzahlen hergestellt werden können, an geeigneter Stelle der Datenleitung untergebracht werden. Die Unterbringung in dem Steckverbinder, insbesondere dem Stecker oder auch einer Buchse, hat den Vorteil, dass der RFID-Chip schon mit Herstellung der Steckverbindung an seiner Sollposition untergebracht werden kann. Alternativ oder ergänzend dazu kann vorgesehen werden, dass der RFID-Chip z. B. auf dem Außenmantel der Datenleitung aufgebracht, z. B. aufgeklebt oder aufgedruckt wird. Ebenso ist es denkbar, dass der zumindest eine RFID-Chip mit der Herstellung des Kabels, insbesondere mit der Herstellung des Außenmantels des Kabels, hergestellt wird. In besonders vorteilhafter Weise sind somit die Steckverbindung (Stecker oder Buchse) der Datenleitung und/oder das Kabel der Datenleitung selber mit zumindest einem RFID-Chip versehen. Nachdem die Datenleitung fertig konfektioniert worden ist (auf entsprechende Länge gebracht wurde und an den Enden mit Stecker und/oder Buchse versehen worden ist), werden die Konfektionsdaten der fertigen Datenleitung in den zumindest einen RFID-Chip eingespeichert. Damit steht dann danach eine Datenleitung zur Verfügung, wobei die in dem zumindest einem RFID-Chip abgespeicherten Daten über den Typ der Datenleitung von einer Leseeinrichtung des Netzwerkinfrastrukturgeräts, an dem die Datenleitung angeschlossen wird, ausgelesen werden können.

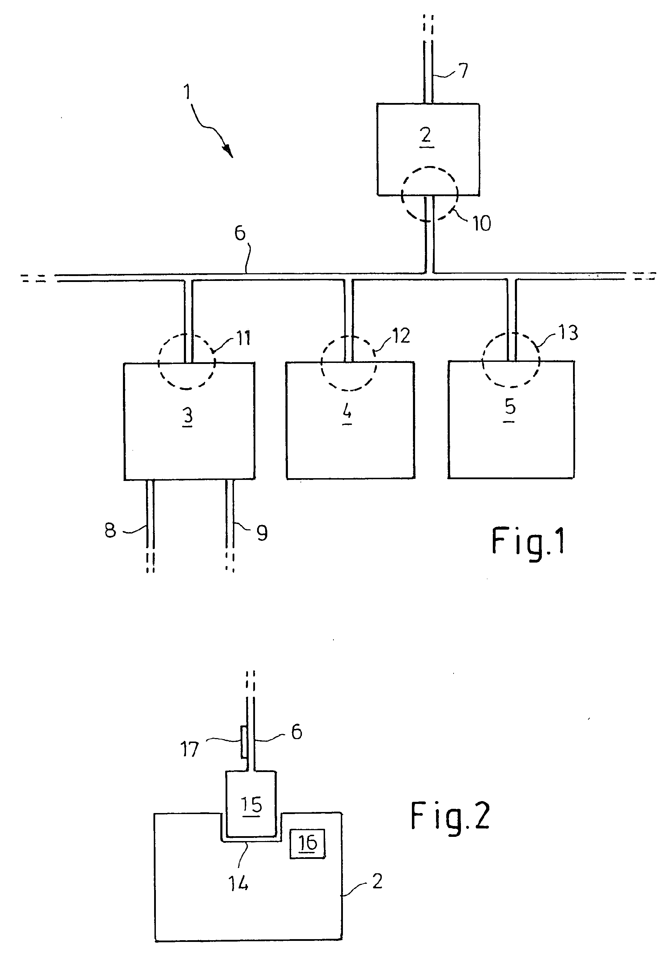

Ein Ausführungsbeispiel der Erfindung ist in den Figuren 1 und 2 gezeigt.

Figur 1 zeigt, soweit im Einzelnen dargestellt, ein Netzwerk 1 mit einer beispielhaften Topologie, wobei innerhalb des Netzwerks 1 mehrere Netzwerkinfrastrukturgeräte 2 bis 5 über eine Datenleitung 6 miteinander verbunden sind. Die Netzwerkinfrastrukturgeräte 2 bis 5 können über weitere Datenleitungen, beispielhaft über Datenleitungen 7 bis 9, mit anderen Netzwerkinfrastrukturgeräten verbunden werden. Netzwerkinfrastrukturgeräte 2 bis 5 sind z. B. PCs, Drucker, Sensoren, Aktuatoren, Router, Switches, Hubs und dergleichen. Diese Aufzählung ist lediglich beispielhaft und nicht abschließend.

Die Datenleitung 6 ist über Verbindungen 10 bis 13 mit dem jeweiligen zugehörigen Netzwerkinfrastrukturgerät 2 bis 5 verbunden. Diese Verbindungen 10 bis 13 sind im Detail in Figur 2 dargestellt.

Eine solche Verbindung 10 bis 13 ist beispielsweise dadurch realisiert, dass ein Netzwerkinfrastrukturgerät 2 eine Buchse 14 aufweist, in die ein Stecker 15 am Ende der Datenleitung 6 eingesteckt werden kann. Auch die umgekehrte Anordnung, nämlich Stecker im Netzwerkinfrastrukturgerät und Buchse am Ende der Datenleitung, ist denkbar.

In erfindungsgemäßer Weise weist das Netzwerkinfrastrukturgerät 2 eine Leseeinrichtung 16 auf, wobei diese Leseeinrichtung 16 in dem Netzwerkinfrastrukturgerät 2 integriert ist oder zusätzlich an dieser angeschlossen (d. h. nachgerüstet) werden kann. Die Datenleitung 6 weist einen RFID-Chip 17 auf, der auf oder in der Datenleitung 6 und/oder auf oder in dem Stecker 15 angeordnet ist. Wesentlich ist, dass der RFID-Chip 17 unverlierbar auf oder an der Datenleitung 6 angeordnet und untergebracht bzw. befestigt ist und die auf ihm gespeicherten Daten von der Leseeinrichtung 16 des Netzwerkinfrastrukturgeräts 2 ausgelesen werden können. Dies erfolgt in an sich bekannter Weise funkbasiert, wobei auch der Aufbau solcher RFID-Chips 17 an sich bekannt ist.

### Bezugszeichenliste:

- 1.: Netzwerk
- 2.: Netzwerkinfrastrukturgerät
- 3.: Netzwerkinfrastrukturgerät
- 4.: Netzwerkinfrastrukturgerät
- 5.: Netzwerkinfrastrukturgerät
- 6.: Datenleitung
- 7.: Datenleitung
- 8.: Datenleitung
- 9.: Datenleitung
- 10.: Verbindung
- 11.: Verbindung
- 12.: Verbindung
- 13.: Verbindung
- 14.: Buchse
- 15.: Stecker
- 16.: Leseeinrichtung
- 17.: RFID-Chip

## Patentansprüche

1. Netzwerkinfrastrukturgerät (2 bis 5), das in einem Netzwerk (1) angeordnet ist, wobei das Netzwerkinfrastrukturgerät (2 bis 5) über eine Datenleitung (6 bis 9) mit anderen Netzwerkinfrastrukturgeräten (2 bis 5) verbunden wird, in dem die einen Stecker (15) aufweisende Datenleitung (6 bis 9) in eine Buchse (14) des Netzwerkinfrastrukturgeräts (2 bis 5) eingesteckt wird, **dadurch gekennzeichnet, dass** das Netzwerkinfrastrukturgerät (2 bis 5) eine funkbasierte Leseeinrichtung (16) aufweist und im Bereich des Steckers (15) der Datenleitung (6 bis 9) ein RFID-Chip (17) vorgesehen ist, wobei der RFID-Chip (17) zumindest Daten über den Typ der Datenleitung (6 bis 9) enthält, wobei diese Daten von der Leseeinrichtung (16) ausgelesen und von dem Netzwerkinfrastrukturgerät (2 bis 5) verarbeitet werden.

2. Netzwerkinfrastrukturgerät (2 bis 5) nach Anspruch 1, **dadurch gekennzeichnet, dass** das zumindest eine Netzwerkinfrastrukturgerät (2 bis 5) dazu ausgebildet ist, die von der Leseeinrichtung (16) ausgelesenen Daten an weitere Netzwerkinfrastrukturgeräte (2 bis 5) zu übertragen.

3. Netzwerkinfrastrukturgerät (2 bis 5) nach Anspruch 1 oder 2, **dadurch gekennzeichnet, dass** das zumindest eine Netzwerkinfrastrukturgerät (2 bis 5) ein Switch, ein Router oder ein Hub ist.

4. Datenleitung (6 bis 9), ausgebildet zum Einsatz in einem Netzwerk (1), wobei die Datenleitung (6 bis 9) einen Stecker (15) aufweist, der in eine Buchse (14) eines Netzwerkinfrastrukturgeräts (2 bis 5) des Netzwerks (1) eingesteckt wird, **dadurch gekennzeichnet, dass** die Datenleitung (6 bis 9) einen RFID-Chip (17) aufweist, der Daten zumindest in Bezug auf den Typ der Datenleitung (6 bis 9) enthält, wobei diese Daten von dem Netzwerkinfrastrukturgerät (2 bis 5) ausgelesen werden.

5. Datenleitung (6 bis 9) nach Anspruch 4, **dadurch gekennzeichnet, dass** der RFID-Chip (17) im Bereich des Steckers (15) angeordnet ist.

6. Datenleitung (6 bis 9) nach Anspruch 4 oder 5, **dadurch gekennzeichnet, dass** der RFID-Chip (17) auf der Oberfläche des Steckergehäuses des Steckers (15) aufgebracht oder in dem Steckergehäuse integriert ist.

7. Datenleitung (6 bis 9) nach Anspruch 4, 5 oder 6, **dadurch gekennzeichnet, dass** der RFID-Chip (17) auf oder in der Datenleitung (2 bis 5) angeordnet ist.

8. Datenleitung (6 bis ) nach Anspruch 8, **dadurch gekennzeichnet, dass** der RFID-Chip (17) in einem Außenmantel der Datenleitung (2 bis 5) integriert oder auf dem Außenmantel der Datenleitung (2 bis 5) aufgebracht, insbesondere aufgedruckt oder aufgeklebt, ist.
